# EUROPÄISCHE PATENTSCHRIFT

(11) **EP 0 883 645 B1**
(45) Veröffentlichungstag und Bekanntmachung des Hinweises auf die Patenterteilung: **11.04.2001**
(21) Anmeldenummer: 96934758.2
(22) Anmeldetag: 19.10.1996
(51) Int. Cl.: C08J 5/18, A22C 13/00, C08L 1/02

(54) **NACH DEM AMINOXIDVERFAHREN HERGESTELLTE NAHRUNGSMITTELHÜLLEN AUF CELLULOSEBASIS**
CELLULOSE-BASED FOODSTUFF CASINGS PREPARED BY THE AMINE OXIDE PROCESS
ENVELOPPES ALIMENTAIRES A BASE DE CELLULOSE PRODUITES SELON LE PROCEDE PAR OXYDES D'AMINE

(30) Priorität: 01.03.1996 DE 19607953
(43) Veröffentlichungstag der Anmeldung: 16.12.1998
(73) Patentinhaber: Kalle Nalo GmbH & Co. KG, 65203 Wiesbaden (DE)
(72) Erfinder: HAMMER, Klaus, Dieter, D-55120 Mainz (DE); GORD, Herbert, D-55218 Ingelheim (DE); GROLIG, Gerhard, D-64546 Mörfelden-Walldorf (DE); MARON, Reinhard, D-07407 Rudolstadt (DE); BERGHOF, Klaus, D-07407 Rudolstadt (DE)
(74) Vertreter: Zounek, Nikolai, Dipl.-Ing.
(86) Internationale Anmeldenummer: EP9604550
(87) Internationale Veröffentlichungsnummer: WO9731970

(56) Entgegenhaltungen:
- EP-A- 0 662 283
- EP-A- 0 692 194
- EP-A- 0 712 889
- WO-A-93/13670
- WO-A-95/07811
- WO-A-95/35340
- WO-A-96/34037
- DE-A- 1 694 047
- DE-B- 1 272 527
- GB-A- 1 002 753

## Beschreibung

Die Erfindung betrifft flächen- oder schlauchförmige Nahrungsmittelhüllen auf Cellulosebasis, die durch Extrudieren ("Verspinnen") von in N-Methyl-morpholin-N-oxid gelöster Cellulose hergestellt sind. Die Hüllen sind besonders geeignet als Wursthüllen.

Cellulose ist in den üblichen Lösemitteln nicht löslich. Sie hat keinen Schmelzpunkt oder -bereich und kann daher auch nicht thermoplastisch verarbeitet werden. Deshalb wird sie normalerweise zur Herstellung von Nahrungsmittelhüllen chemisch umgewandelt. Diese Verfahren sind jedoch mit einem Abbau der Cellulose verbunden, d. h. der durchschnittliche Polymerisationsgrad der Cellulose wird geringer. Zudem sind die Verfahren technisch sehr aufwendig und entsprechend teuer.

Gegenwärtig wird das Viskoseverfahren bevorzugt. Darin wird die Cellulose mit Natronlauge und anschließend mit Schwefelkohlenstoff umgesetzt. Auf diese Weise wird eine gelb-orangefarbene Cellulosexanthogenat-Lösung erhalten, die man durch eine Spinndüse extrudiert. Mit Hilfe von Fäll- und Waschbädern wird die Cellulose dann regeneriert. Dafür mußten umfangreiche Vorrichtungen zur Reinigung von Abluft und Abwasser entwickelt werden.

Bereits im Jahre 1936 entdeckte man, daß Cellulose in Oxiden tertiärer Amine löslich ist (DE 713 486); aber erst mehr als 30 Jahre später wurde diese Entdeckung weiterverfolgt. Dabei wurde N-Methyl-morpholin-N-oxid (NMMO) als das am besten geeignete Lösemittel identifiziert. Die Cellulose löst sich darin, ohne sich dabei chemisch zu verändern. Es findet kein Abbau der Celluloseketten statt. Auch die Herstellung der entsprechenden Spinnlösungen ist bekannt (DD 218 104; DD 298 789; US-A 4 145 532; US-A 4 196 282; US-A 4 255 300). Aus den Lösungen lassen sich durch Extrudieren in ein Spinnbad Fäden herstellen (DE-A 44 09 609; US-A 5 417 909). In der WO 95/07811 (= CA 2 149 218) ist auch ein Verfahren zur Herstellung von Cellulose-Schlauchfolien nach dem Aminoxidverfahren offenbart. Kennzeichnend an diesem Verfahren ist die Kühlung der extrudierten Folie mit Kühlgas unmittelbar unterhalb des Ringspalts der Extrusionsdüse. Gemäß der EP-A 662 283 wird die extrudierte Schlauchfolie von innen mit Hilfe von Flüssigkeit gekühlt.

Rückgewinnung und Reinigung des NMMO's sind in der DD 274 435 beschrieben. Da die Cellulose in dem Verfahren chemisch nicht umgewandelt wird, ist der apparative Aufwand geringer. Bei dem Aminoxidverfahren fallen keine gasförmigen oder wäßrigen Abfallprodukte an, so daß es keine Probleme bei der Abluft oder dem Abwasser gibt. Es erlangt daher eine zunehmende Bedeutung.

In der EP-A 0 686 712 wird die Herstellung von flexiblen Cellulosefasern nach dem N-Methylmorpholin-N-Oxid(NMMO)-Spinnverfahren beschrieben. Darin wird eine Celluloselösung in wasserhaltigem NMMO durch eine Spinndüse ausgepreßt, über eine Luftstrecke in ein NMMO-haltiges, wäßriges Fällbad geführt und anschließend gewaschen, nachbehandelt und getrocknet.

Gemäß der WO 93/13670 wird eine nahtlose, schlauchförmige Nahrungsmittelhülle durch Extrudieren einer Lösung von Cellulose in NMMO/Wasser mit Hilfe einer speziellen Extrusionsdüse hergestellt. Zwischen Extrusionsdüse und Fällbad befindet sich eine Luftstrecke. Kennzeichnend für dieses Verfahren ist ein speziell geformter Hohldorn, durch den hindurch die Fällflüssigkeit auch im Innern des Schlauches zirkulieren kann. In der Luftstrecke wird das Innere des extrudierten Schlauches praktisch vollständig von Hohldorn und Fällflüssigkeit ausgefüllt. Der Schlauch wird dabei nicht querverstreckt.

In der WO 95/35340 wird ein Verfahren zur Herstellung von Celluloseblasfolien beschrieben, in dem eine in NMMO gelöste, nicht derivatisierte Cellulose verwendet wird.

Das Aminoxidverfahren hat jedoch auch Nachteile. Die nicht-derivatisierten Cellulosemoleküle sind in der NMMO-Lösung bereits vororientiert und wesentlich dichter gepackt als bei chemisch veränderten ("derivatisierten") Molekülen. Beim Extrudieren wird die Orientierung in Längsrichtung noch stärker. Die so erzeugten Fäden zeigen daher eine hohe Festigkeit in Längsrichtung, jedoch nur eine geringe in Querrichtung. Sie neigen stark zum Spleißen bei mechanischer Beanspruchung im nassen Zustand. Folien oder andere Formkörper, die in Längs- und Querrichtung belastbar sein müssen, lassen sich so kaum herstellen.

Es bestand daher die Aufgabe, das Aminoxidverfahren so zu modifizieren, daß ausreichend belastbare Folien oder Formkörper, insbesondere schlauchförmige Nahrungsmittelhüllen, hergestellt werden können. Das Verfahren sollte dabei mit möglichst wenigen Schritten auskommen, kostengünstig und umweltverträglich bleiben.

Lösen läßt sich die Aufgabe, wenn man die Naßbehandlung mit einer Blasverformung kombiniert. Gegenstand der vorliegenden Erfindung ist somit eine nahtlose, schlauchförmige Folie auf Cellulosebasis, erhältlich durch Extrudieren einer cellulose-, N-methyl-morpholin-N-oxid und wasserhaltigen Spinnlösung durch eine Ringspaltdüse und Behandeln des Folienschlauches in einem N-methylmorpholin-N-oxid-haltigen, wäßrigen Spinnbad, wobei die Folie in einer Luftstrecke zwischen Ringspalt und Oberfläche des Spinnbads durch Blasverformung querverstreckt wird, dadurch gekennzeichnet, daß die Spinnlösung 0,2 bis 50 Gew.-%, bezogen auf das Gewicht der Cellulose, an modifizierenden Verbindungen enthält, die die Geschmeidigkeit, Zähigkeit, Clip- und Scherstabilität der schlauchförmigen Hülle erhöhen. Polyethylenimine sind als modifizierende Verbindungen ausgeschlossen.

Die Spinnlösung enthält bevorzugt 7 bis 15 Gew.-%, besonders bevorzugt 9 bis 12 Gew.-%, jeweils bezogen auf das Gesamtgewicht der Spinnlösung, an Cellulose. Der durchschnittliche Polymerisationsgrad der Cellulose beträgt dabei bevorzugt 300 bis 700, besonders bevorzugt 400 bis 650. Als Lösemittel enthält die Spinnlösung bevorzugt 90,5 bis 92,5 Gew.-% NMMO und 9,5 bis 7,5 Gew.-% Wasser. Die in diesem Absatz genannten Parameter, zusammen mit der Temperatur, bestimmen im wesentlichen die Viskosität und das Fließverhalten der Spinnlösung.

Verfahren zur Herstellung der Spinnlösung sind dem Fachmann allgemein geläufig. Üblicherweise wird Zellstoff in einer 60gew.-%igen wäßrigen NMMO-Lösung bei Raumtemperatur angemaischt. Der Zellstoff stammt gewöhnlich aus Holz oder Baumwolle. Bei steigender Temperatur wird dann in einem beheizten Rührbehälter unter Vakuum so lange Wasser abdestilliert, bis der Rückstand aus Zellstoff und NMMO-Monohydrat besteht. Das ist der Fall bei einem NMMO-Gehalt von 87,7 Gew.-%, bezogen auf das Gesamtgewicht von NMMO und Wasser. Das Verhältnis NMMO zu Wasser läßt sich problemlos durch den Brechungsindex bestimmen. In dem NMMO-Monohydrat löst sich der Zellstoff bei einer Temperatur von 85 bis 95 °C und intensivem Rühren vollständig auf. Der Brechungsindex der Lösung liegt bei 1,4910 bis 1,4930. Der Wassergehalt ist auf 7,5 bis 9,5 Gew.-% abgesunken. Die Spinnlösung wird entgast, filtriert und in den Spinnbehälter überführt.

Die modifizierenden Verbindungen zur Verbesserung der Geschmeidigkeit müssen mit der Cellulose/NMMO/Wasser-Lösung mischbar sein. Der Anteil dieser Verbindungen beträgt bevorzugt 0,5 bis 20 Gew.-%, besonders bevorzugt 1 bis 15 Gew.-%, jeweils bezogen auf das Gewicht der Cellulose. Die Verbindungen lassen sich bei einer Temperatur von 85 bis 105 °C, vorzugsweise 90 bis 100 °C, mit der Spinnlösung homogen vermischen. Besonders geeignete modifizierende Verbindungen sind Stärke, Stärke- und Cellulosederivate (insbesondere Ester oder Ether der Stärke oder Cellulose), sowie Zuckerester, daneben auch hydrophile, in der Natur vorkommende Polymere (bevorzugt Alginsäure und Alginate, Chitosan und Carrageenan). Geeignet sind auch hydrophile synthetische Polymere (bevorzugt Polyvinylalkohol, Polyvinylacetate und Polyacrylate) sowie Polymere, die gleichzeitig hydrophile und hydrophobe Eigenschaften besitzen (bevorzugt Ester aus einem Zucker - wie Saccharose - und Fettsäuren, wobei die Ester einen HLB-Wert von 1 bis 15 aufweisen; HLB = hydrophilic-lipophilic balance). Gegebenenfalls sind auch Fettsäuren und deren Salze, beispielsweise Stearinsäure oder Calcium-stearat, Wachse und Paraffine geeignet. Schließlich lassen sich auch Polyvinylpyrrolidon, Copolymere aus Vinylpyrrolidon und (2-Dimethylamino-ethyl)-methacrylat, Copolymere aus Methylvinylether und Maleinsäureanhydrid oder aus Methylvinylether und Maleinsäuremonoalkylester einsetzen. Die modifizierenden Verbindungen können auch vernetzbar sein. Sie wirken auch als innere (primäre) Weichmacher. Auf eine Imprägnierung mit sekundären Weichmachern (wie Glycerin) kann häufig sogar ganz verzichtet werden, wenn der Anteil der modifizierenden Verbindungen in der erfindungsgemäßen Nahrungsmittelhülle groß genug ist (allgemein in der Größenordnung von 8 Gew.-% oder mehr, bezogen auf das Gewicht der trockenen Cellulose). Darüber hinaus vermindern sie allgemein die Kristallisationsneigung der Cellulose.

Extrudiert wird die Spinnlösung durch die Ringspaltdüse vorzugsweise bei einer Temperatur von 85 bis 105 °C, besonders bevorzugt 90 bis 95 °C. Der Ringspalt ist allgemein 0,1 bis 2,0 mm, bevorzugt 0,2 bis 1,0 mm, weit. Die Weite muß dabei an den Verzug angepaßt sein. Als "Verzug" wird der Quotient aus der Geschwindigkeit beim Verlassen des Ringspalts (Ausströmgeschwindigkeit) und der Geschwindigkeit, mit der der extrudierte Schlauch abgezogen wird (Abzugsgeschwindigkeit) bezeichnet. Der Verzug liegt im allgemeinen bei 3,0 bis 0,10, bevorzugt 2,0 bis 0,2, besonders bevorzugt 1 bis 0,4. Die Ausströmgeschwindigkeit liegt je nach Konstruktion der Anlage bei 5 bis 120 m/min, bevorzugt bei 10 bis 80 m/min. Sie wird auch durch das Kaliber bestimmt. Auf den extrudierten Schlauch wird vorteilhaft nur ein geringer Zug in Längsrichtung ausgeübt, der im wesentlichen durch sein Eigengewicht zustande kommt.

Die "Luftstrecke", d.h. die Strecke zwischen Ringspalt und Oberfläche des Spinnbads, in der die Blasverformung stattfindet, beträgt bevorzugt 1 bis 50 cm, besonders bevorzugt 2,5 bis 20 cm. Sie hängt auch vom Durchmesser ("Kaliber") der Schlauchfolie nach der Blasverformung ab. Anders als in der obengenannten WO 95/07811 und der EP-A 662 283 sind keine Maßnahmen für eine zusätzliche Kühlung in der Luftstrecke notwendig und dementsprechend auch nicht vorgesehen. Der extrudierte Schlauch kühlt sich in der Luftstrecke nur wenig ab. Eine Querverstreckung wäre sonst kaum möglich. Die Blasverformung wird durch Druckluft oder andere Gase bewirkt, die durch Öffnungen im Düsenkörper in das Innere des Schlauches gelangen. Durch die Verstreckung in Querrichtung erhöht sich die Querfestigkeit des Schlauches erheblich. Je nach Verzug ist der Durchmesser des blasverformten Schlauches bis zu 100 % größer oder bis zu 50 % kleiner, bevorzugt bis zu 80 % größer oder bis zu 20 % kleiner als unmittelbar beim Verlassen des Ringspalts. Eine Querverstreckung bei gleichzeitig kleiner werdendem Durchmesser ist naturgemäß nur dann möglich, wenn der Verzug kleiner als 1 ist. Bevorzugt ist der Durchmesser des blasverformten Schlauches 10 bis 100 % größer, besonders bevorzugt 20 bis 80 % größer, als unmittelbar beim Verlassen des Ringspalts.

Gegebenenfalls wird der Schlauch über ein Rohr, bevorzugt ein Metallrohr, geführt. Der Durchmesser dieses Rohres kann zwischen 30 % größer und 30 % kleiner als der des Ringspaltes gewählt werden. Fällungsflüssigkeit und Stützluft werden über dieses Rohr zugeführt.

Nach dem Eintreten in das Spinnbad verringert sich der Durchmesser des Schlauches. Durch entsprechende Vorrichtungen im Düsenkörper gelangt die Spinnbadlösung auch in das Innere des Celluloseschlauches. Dadurch verfestigt sich der Schlauch schneller; gleichzeitig wird ein Zusammenkleben der Innenseiten verhindert. Der Flüssigkeitsspiegel im Innern des Schlauches sollte nicht wesentlich höher oder tiefer liegen als der des umgebenden Spinnbades. Das Spinnbad selbst ist eine wäßrige Lösung, die 5 bis 50 Gew.-%, bevorzugt 8 bis 20 Gew.-%, an NMMO enthält. Die Temperatur des Spinnbades liegt im Bereich von 0 bis 50 °C, bevorzugt bei 2 bis 20 °C.

Die Tiefe des Spinnbades wird durch das Kaliber des Celluloseschlauches, seine Wandstärke und die gewünschte Verweildauer im Bad bestimmt. Allgemein sollte die Tiefe so gewählt sein, daß beim Flachlegen des Schlauches an der Umlenkwalze die dabei entstehenden Kanten nicht beschädigt werden. Bei einem Schlauch vom Kaliber 20, der unmittelbar nach Verlassen des Ringspalts eine Wandstärke von 0,5 mm besitzt und das Bad mit einer Geschwindigkeit von 20 m pro Minute durchläuft, hat das Spinnbad eine Tiefe von etwa 3 m.

Zur weiteren Verfestigung passiert der flachgelegte Schlauch dann noch mehrere NMMO-haltige Fällkufen. Die erste Fällkufe enthält etwa 10 bis 20 Gew.-% NMMO. In den folgenden Fällkufen nimmt der Anteil an NMMO ab. Es hat sich als günstig erwiesen, die Temperatur von einer Fällkufe zur nächsten zu erhöhen, bis auf etwa 60 bis 70 °C in der letzten Kufe. Der NMMO-Anteil im Schlauch wird so noch stärker vermindert.

An diese sogenannte "Fällstrecke" schließen sich mit Wasser gefüllte Waschkufen an, in denen letzte Spuren von NMMO aus dem Schlauch entfernt werden. Die Temperatur dieser Bäder beträgt 15 bis 70 °C, bevorzugt 40 bis 60 °C. Im allgemeinen folgt dann noch eine sogenannte Weichmacherkufe. Diese enthält eine wäßrige Lösung eines Weichmachers für Cellulose. Geeignete Weichmacher sind Polyole und Polyglykole, insbesondere Glycerin. Die wäßrige Lösung enthält 5 bis 30 Gew.-%, bevorzugt 6 bis 15 Gew.-%, an Weichmacher. Die Temperatur der Weichmacherlösung beträgt vorteilhaft 20 bis 80 °C, bevorzugt 30 bis 70 °C. Der Glyceringehalt der Hülle beträgt dann etwa 15 bis 30 Gew.-%, bevorzugt 18 bis 23 Gew.-%, jeweils bezogen auf sein Gesamtgewicht.

Danach werden die Schläuche im aufgeblasenen Zustand durch einen Heißlufttrockner geführt. Zweckmäßig wird bei abnehmender Temperatur getrocknet (von etwa 150 °C am Eingang bis etwa 80 °C am Ausgang des Trockners). Gegebenenfalls kann durch entsprechend erhöhten Innendruck beim Trocknen eine zusätzliche Querorientierung erzielt werden. Ansonsten wird der Schlauch beim Trocknen auf das ursprüngliche Kaliber aufgeblasen, um den einmal erreichten Grad an Querorientierung unverändert zu lassen. Beim Trocknen sinkt der Quellwert auf 130 bis 180 %, vorzugsweise 140 bis 170 %, je nach Trockenbedingungen und Glyceringehalt. Der Schlauch wird dann angefeuchtet, bis der Wassergehalt bei 8 bis 20 Gew.-%, bevorzugt 16 bis 18 Gew.-% liegt, jeweils bezogen auf das Gesamtgewicht des Schlauches. Anschließend kann er mit Hilfe eines Quetschwalzenpaares flachgelegt und aufgewickelt werden.

Gebrauchte wäßrige NMMO-Lösung lassen sich durch Ionenaustauschersäulen reinigen. Das Wasser kann im Vakuum abgezogen werden, bis die NMMO-Konzentration 60 Gew.-% erreicht hat. Diese NMMO-Lösung kann dann erneut zur Herstellung der Spinnlösung verwendet werden. Das NMMO wird so nahezu vollständig zurückgewonnen.

Je nach Kaliber haben die fertigen Schläuche bei einem Glyceringehalt von 20 bis 22 Gew.-% und einem Wassergehalt von 8 bis 10 Gew.-%, jeweils bezogen auf das Gesamtgewicht des Schlauches, ein Gewicht von 30 bis 120 g/m², vorzugsweise 35 und 80 g/m². Das Quadratmetergewicht steigt allgemein mit zunehmendem Kaliber. Der Platzdruck ist ebenfalls abhängig vom Kaliber (kleine Kaliber weisen einen höheren Platzdruck auf). Bei einem Schlauch mit einem Kaliber von 16 mm liegt der Platzdruck bei etwa 60 kPa, bei einem Kaliber von 30 mm bei etwa 40 kPa, bei einem Kaliber von 50 mm bei etwa 24 kPa und bei einem Kaliber von 140 mm bei etwa 15 kPa. Der Platzdruck wird dabei jeweils in nassem Zustand gemessen.

Die erfindungsgemäßen schlauchförmigen Hüllen können darüber hinaus auf der Innen- und/oder Außenseite mit einer Imprägnierung oder Beschichtung versehen sein, z. B. einer Flüssigrauchimprägnierung oder einer "easy-peel"-Innenpräparation. Entsprechendes gilt natürlich auch für Flachfolien.

Ein wesentlicher Vorteil der erfindungsgemäßen flächen- oder schlauchförmigen Folien liegt in der gleichmäßigen Struktur und damit gleichmäßigen Dichte, die beim Fällen erzielt wird. Folien, die nach dem Viskoseverfahren hergestellt sind, weisen demgegenüber einen Dichtegradienten auf (höhere Dichte an der Oberfläche, geringere im Innern).

Verwendung finden die erfindungsgemäßen schlauchförmigen Folien bevorzugt als Wursthüllen, insbesondere als "Schäldarm" bei der Herstellung von Frankfurter Würstchen. Sie können daneben auch als Membranen für verschiedene Zwecke, z. B. bei der Blutwäsche, eingesetzt werden. Durch Aufschneiden der Schläuche lassen sich schließlich auch Flachfolien erhalten.

Werden die Celluloseschläuche als Wursthüllen verwendet, so kann das Füllkaliber dem Durchmesser des Ringspalts entsprechen oder bis zu 120 % darüber liegen. Bevorzugt liegt das Füllkaliber 10 bis 80 % über dem Durchmesser des Ringspalts.

Die folgenden Beispiele dienen der näheren Erläuterung der Erfindung. Prozente sind darin Gewichtsprozente, soweit nicht anders angegeben. Flachbreite, Gewicht der Hülle und Dicke der Hüllenwand wurden unter Standardbedingungen (55 % rel. Luftfeuchte; 23 °C) bestimmt.

### Beispiel 1 (Vergleichsbeispiel):

510 g gemahlener Holzzellstoff (^{®}Cellunier F der Firma Rayonier) mit einem durchschnittlichen Polymerisationsgrad von 535 (nach der Cuoxam-Methode bestimmt) wurde in 5087 g einer 60 %igen NMMO-Lösung angemaischt. Der pH-Wert der Maische wurde dann mit NaOH auf einen Wert von 11 eingestellt. Unter Rühren und Heizen wurde dann im Vakuum bei steigender Temperatur Wasser abdestilliert, bis bei einem NMMO-Gehalt von 87,7 %, bezogen auf das Gesamtgewicht von Wasser und NMMO, das Monohydrat vorlag (erkennbar an einem Brechungsindex von 1,4820). Während dieser etwa 4 Stunden dauernden Phase wurde das Vakuum bei 10 bis 16 Torr gehalten. Nach weiterem 2- bis 3-stündigem Rühren bei etwa 85 bis 95 °C war der Zellstoff vollständig gelöst. Damit weniger Wasser verdampft, wurde das Vakuum während dieser Zeit auf etwa 200 Torr eingestellt. Der Brechungsindex pendelte sich dann bei etwa 1,4910 bis 1,4930 ein, was einem Wassergehalt von 7,5 bis 9 % entspricht.

Die so hergestellte Spinnlösung wurde bei einer Temperatur von 90 °C durch eine Ringspaltdüse mit einem Spaltdurchmesser von 20 mm und einer Spaltbreite von 0,5 mm extrudiert. Mit einer Geschwindigkeit von 20 m/min passierte der Schlauch zunächst eine 10 cm lange Luftstrecke. Dabei wurde er mit innen zugeführter Luft querverstreckt. Anschließend durchlief er eine Spinnbadstrecke von 3 m. Das Spinnbad enthielt eine 14%ige NMMO-Lösung, die auf 5 °C abgekühlt war. Eine Lösung der gleichen Zusammensetzung wurde auch in das Schlauchinnere eingebracht ("Innenbad"). An einer Umlenkwalze in der Spinnkufe wurde der Schlauch dann flachgelegt. Der Schlauch war so weit querverstreckt, daß seine Flachbreite nach dem Verlassen der Spinnkufe 30 mm betrug. Die Kanten zeigten keine Beschädigung.

Der Schlauch passierte dann 4 Fällkufen mit je 8 Umlenkwalzen oben und unten, einer Badtiefe von 1 m und einer Luftstrecke von 2 m. Am Ende der letzten Kufe wurde Wasser eingeleitet, das im Gegenstrom geführt wurde. Am Ausgang der ersten Kufe wurde der NMMO-Gehalt auf diese Weise bei 12 bis 16 % gehalten. Die Temperatur stieg bis auf 60 bis 70 °C in der letzten Kufe. Nach Durchlaufen dieser Fällstrecke wurden dann in 4 Waschkufen Reste von NMMO aus dem Schlauch herausgewaschen. Die Temperatur in diesen Kufen lag ebenfalls bei 60 bis 70 °C. Zum Schluß wurde der Schlauch durch eine Weichmacherkufe geführt, die eine 10 %ige Glycerinlösung mit einer Temperatur von 60 °C enthielt.

Bei einem Quellwert von 290 % nahm der fertige Schlauch 21 % Glycerin auf. Die Flachbreite betrug beim Verlassen der Glycerinkufe noch 20 mm. Zwischen 2 Quetschwalzenpaaren wurde der Schlauch dann mit Heißluft getrocknet. Der Trockner wies mehrere Zonen mit abnehmender Temperatur auf. Die Zone am Eingang hatte eine Temperatur von 120°C, die am Ausgang von 80 °C. Danach wurde der Schlauch angefeuchtet, bis sein Wassergehalt bei 8 bis 12 % lag (bezogen auf das Gewicht der Cellulose), und aufgewickelt. Der Platzdruck dieses Schlauches betrug 52 kPa, seine statische Dehnung 20,5 mm, sein Quellwert 165 %. Er wurde dann auf 16 bis 18 % angefeuchtet und abschnittsweise aufgestockt ("zu Raupen gerafft").

Die Raupen wurden auf einer automatischen Füllmaschine (^{®}FrankAMatic) mit Würstchenbrät gefüllt, gebrüht und geräuchert. Danach wurde die Hülle mit einer automatisch arbeitenden Vorrichtung abgeschält. Im Brüh- und Räucherverhalten war dieser Schäldarm mindestens so gut wie ein nach dem Viskoseverfahren hergestellter.

### Beispiel 2 (Vergleichsbeispiel):

Eine Spinnlösung wie in Beispiel 1 beschrieben wurde bei einer Temperatur von 90 °C durch eine Ringspaltdüse mit einem Durchmesser des Ringspalts von 45 mm und einer Spaltbreite von 0,7 mm extrudiert. Mit einer Geschwindigkeit von 20 m/min passierte der so gebildete Schlauch eine Luftstrecke von 15 cm, um dann in das Spinnbad einzutauchen. In der Luftstrecke wurde er - wie bereits beschrieben - mit Druckluft querverstreckt. Das Spinnbad hatte eine Tiefe von 3 m und war mit einer 12 %igen wäßrigen NMMO-Lösung, die eine Temperatur von 5 °C aufwies, gefüllt. Spinnbadlösung wurde auch in das Innere des Schlauches eingefüllt. Beim Verlassen der Spinnkufe hatte der Schlauch eine Flachbreite von 56 mm. Sein Quellwert betrug 302 %. Er wurde dann mit Stützluft aufgeblasen, so daß die Flachbreite wieder auf 66 mm anstieg. Vor dem Aufwickeln wurde er angefeuchtet, bis der Wassergehalt bei 14 bis 16 %, bezogen auf das Gewicht des trockenen Schlauches, lag. Der Glyceringehalt betrug 20 % bei einem Gesamtgewicht von 56 g/m². Quellwert wurde mit 158 % bestimmt. Der gewässerte Schlauch hat einen Platzdruck von 30 kPa. Seine statische Dehnung bei einem Innendruck von 15 kPa liegt bei 44 mm.

Abschnitte dieser Schlauchfolie mit einer Länge von jeweils 50 m wurden zu Raupen gerafft, die dann auf einer automatischen Füllmaschine mit feinem Mettwurstbrät auf ein Füllkaliber von 44 mm gefüllt wurden. Die Würste wurden dann in der üblichen Weise gereift und geräuchert. Dabei zeigten die erfindungsgemäßen Hüllen mindestens so gute Eigenschaften wie nach dem Viskoseverfahren hergestellte Cellulosehüllen.

### Beispiel 3 (Vergleichsbeispiel):

Die im Beispiel 1 beschriebene Spinnlösung wurde bei einer Temperatur von 90 °C durch eine Ringspaltdüse mit einem Durchmesser des Düsenspalts von 26 mm und einer Breite des Düsenspalts von 0,6 mm extrudiert. Anders als in den beiden vorangehenden Beispielen war der Düsenkörper mit einem 50 cm langen Metallrohr verbunden, über das der extrudierte Schlauch geführt wurde. Am oberen Ende des Rohres befanden sich Öffnungen für die Zufuhr der zum Querverstrecken benötigten Druckluft ("Stützluft") und der Spinnbadlösung. Die Luftstrecke zwischen Düsenspalt und Oberfläche des Spinnbades betrug 2,5 cm. Das Spinnbad war mit einer 3°C kalten, 14%igen wäßrigen NMMO-Lösung gefüllt. Die Spinngeschwindigkeit lag bei 20 m/min. Es wurde soviel Stützluft zugeführt, daß der Schlauch beim Verlassen der Spinnkufe eine Flachbreite von 40 mm hatte. Die weitere Behandlung erfolgte dann wie im Beispiel 1 beschrieben. Nach dem Verlassen der Weichmacherkufe lag die Flachbreite noch bei 28 mm. Der Quellwert des weichgemachten Schlauches lag bei 286 %. Er wurde dann im aufgeblasenen Zustand getrocknet, auf 12 bis 16 % Wassergehalt befeuchtet und auf eine Rolle aufgewickelt. Der fertige Schlauch hatte ein Gewicht von 44 g/m². Er enthielt 22 % Glycerin (bezogen auf sein Gesamtgewicht) und hatte einen Quellwert von 165 %. Seine statische Dehnung bei einem Innendruck von 20 kPa lag bei 25,8 mm, sein Platzdruck (gemessen im nassen Zustand) bei 42 kPa.

Die Schläuche wurden abschnittsweise zu Raupen gerafft und auf einer automatischen Füllmaschine mit Würstchenbrät auf ein Füllkaliber von 26 mm gefüllt. Nach dem Brühen und Räuchern in der üblichen Weise wurde die Hülle auf einer automatischen Anlage abgeschält und die Würstchen dann in Dosen verpackt. Die erfindungsgemäßen Wursthüllen erfüllten alle Anforderungen mindestens so gut wie die nach dem Viskoseverfahren hergestellten Hüllen.

### Beispiel 4:

Die gemäß Beispiel 1 hergestellt Spinnlösung, die etwa 9 % Cellulose enthielt, wurde mit 3%, bezogen auf das Gewicht der Cellulose, eines Saccharose-monostearinsäure/palmitinsäure-esters bei einer Temperatur von 95 °C unter Rühren homogen vermischt. Sie wurde dann (bei gleicher Temperatur) durch eine Ringdüse mit einem Durchmesser von 20 mm und einer Spaltbreite von 0,5 mm extrudiert. Mit einer Geschwindigkeit von 20 m/min passierte der Schlauch zunächst eine 10 cm lange Luftstrecke. Dabei wird er innen mit Druckluft beaufschlagt und so querverstreckt. Die weiteren Herstellungsschritte waren identisch mit den im Beispiel 1 beschriebenen.

Die abschnittsweise aufgestockten Hüllen ("Raupen") wurden dann auf die automatische Füllmaschine aufgesetzt und mit Würstchenbrät gefüllt. Nach dem Brühen und Räuchern wurde die Hülle mit einer automatisch wirkenden Vorrichtung abgeschält. Die Hülle zeigte beim Brühen und Räuchern ein Verhalten wie die nach dem Viskoseverfahren hergestellten Hüllen.

In der folgenden Tabelle sind die Eigenschaften einer nach dem üblichen Viskoseverfahren hergestellten Hülle (bezeichnet als "Vergleich") denen von zwei erfindungsgemäßen Hülle gegenübergestellt, wobei die eine (bezeichnet als "A") keine modifizierenden Verbindungen enthielt und gemäß Beispiel 1 hergestellt war, während die andere (bezeichnet als "B") 3 %, bezogen auf das Gewicht der Cellulose, des im Beispiel 4 genannten Zuckeresters enthielt und gemäß diesem Beispiel hergestellt war.

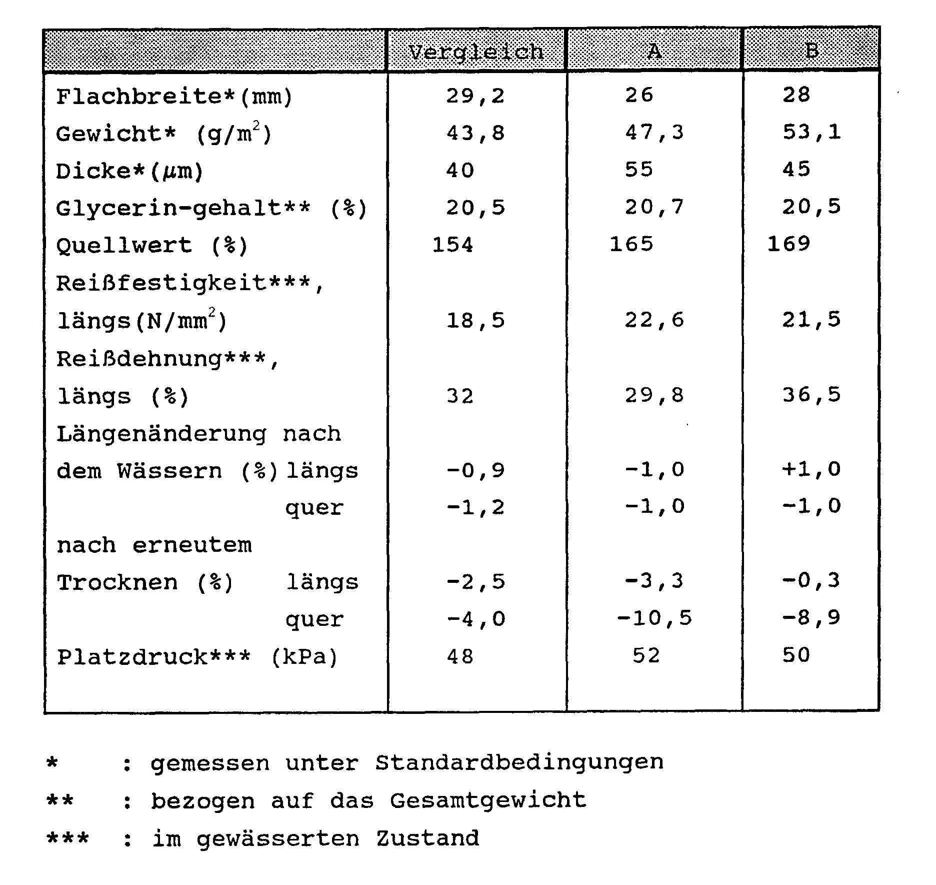

### Beispiel 5:

Die gemäß Beispiel 1 hergestellt Spinnlösung wurde mit 5 %, bezogen auf das Gewicht der Cellulose, eines Copolymers aus Methyl-vinyl-ether und Maleinsäure-monobutylester (molares Verhältnis 1:1) in Form einer 50 %igen ethanolischen Lösung versetzt und bei einer Temperatur von 95 °C homogen vermischt. Die Lösung wurde dann durch eine Ringdüse mit einem Durchmesser von 40 mm und einer Spaltbreite von 0,7 mm extrudiert. Mit einer Geschwindigkeit von 20 m/min passierte der Schlauch eine Luftstrecke von 15 cm, innerhalb derer er mit Druckluft querverstreckt wurde. Die weiteren Herstellungsschritte waren identisch mit den im Beispiel 1 beschriebenen.

Beim Verlassen des Spinnbades hatte der Schlauch eine Flachbreite von 66 mm, was einem Durchmesser von 42 mm entspricht. Beim Verlassen der Glycerinkufe betrug die Flachbreite 56 mm, der Quellwert 302 %. Der Schlauch wurde dann mit Druckluft aufgeblasen, so daß die Flachbreite wieder auf 66 mm anstieg. Vor dem Aufrollen wurde er noch angefeuchtet, bis der Wassergehalt 14 bis 16 % betrug. Der Glyceringehalt lag bei 20 %, bezogen auf das Gesamtgewicht der Hülle, der Quellwert bei 158 %. Der gewässerte Schlauch hatte einen Platzdruck von 30 kPa und eine statische Dehnung von 44 mm bei 15 kPa.

Abschnitte von jeweils 50 m Länge wurden zu Raupen gerafft, die sich dann auf eine automatische Füllmaschine aufsetzen ließen. Die Hülle wurde anschließend maschinell mit feinem Mettwurstbrät auf ein Kaliber von 44 mm gefüllt, gereift und geräuchert. Die Anwendungseigenschaften entsprachen denen von Hüllen, die nach dem Viskoseverfahren hergestellt waren. Die Reißfestigkeit (längs) lag bei 70 %, die Reißdehnung 50 % über der einer ebenfalls nach dem NMMO-Verfahren, jedoch ohne Zusatz der modifizierenden Verbindung hergestellten Hülle. Der Schrumpf war um 12 % geringer als bei dem Vergleichsmaterial. Bei Fleischwurst ließ sich die modifizierte Hülle leichter abschälen als die nichtmodifizierte.

### Beispiel 6:

Die gemäß Beispiel 1 hergestellte Spinnlösung wurde mit 12 %, bezogen auf das Gewicht der Cellulose, eines Copolymers aus Vinylpyrrolidon und 2-Dimethylaminoethyl-methacrylat (molares Verhältnis 1:1) versetzt und bei einer Temperatur von 98 °C homogen vermischt. Die Lösung wurde dann bei dieser Temperatur durch eine Ringdüse mit einem Durchmesser von 26 mm und einer Spaltbreite von 0,6 mm extrudiert. Mit einer Geschwindigkeit von 20 m/min passierte der Schlauch eine Luftstrecke von 50 mm, innerhalb derer er mit Druckluft querverstreckt wurde, so daß er beim Verlassen der Spinnkufe eine Flachbreite von 40 mm hatte. Die weiteren Herstellungsschritte waren identisch mit den im Beispiel 1 beschriebenen. Nach Verlassen der Weichmacherkufe lag die Flachbreite bei 36 mm, der Quellwert bei 286 %.

Der Schlauch wurde dann in aufgeblasenem Zustand getrocknet, auf 12 bis 16 % angefeuchtet und aufgerollt. Er enthielt 22 % Glycerin und hatte nun einen Quellwert von 165 %. Sein Gewicht pro Quadratmeter betrug 44 g. Der Platzdruck (im nassen Zustand) wurde mit 50 kPa bestimmt. Die statische Dehnung bei 20 kPa betrug 25,8 mm. Die Reißfestigkeit im nassen Zustand lag 60 %, die Reißdehnung 45 % über der eines nicht modifizierten Vergleichsmaterials.

Die Schläuche wurden abschnittweise zu Raupen gerafft, auf einer automatischen Füllmaschine mit Würstchenbrät auf ein Füllkaliber von 26 mm gefüllt, gebrüht und geräuchert. Die Hülle wurde dann mit einer automatisch wirkenden Vorrichtung abgeschält; danach wurden die Würstchen in Dosen verpackt.

### Beispiel 7:

Beispiel 6 wurde wiederholt mit der Abweichung, daß nicht 12 %, sondern 20 % des Copolymers aus Vinylpyrrolidon und 2-Dimethylamino-ethyl-methacrylat mit der Spinnlösung vermischt wurden. Extrudiert wurde durch eine Ringdüse mit einem Durchmesser von 40 mm und einer Spaltbreite von 0,6 mm. Mit einer Geschwindigkeit von 28 m/min passierte der Schlauch eine Luftstrecke von 12 cm Länge, innerhalb derer er mit Druckluft querverstreckt wurde. Die weiteren Herstellungsschritte waren identisch mit denen im Beispiel 1.

Beim Verlassen der Spinnkufe hatte der Schlauch eine Flachbreite von 70 mm. Im Unterschied zu den anderen Beispielen durchlief der Schlauch hier keine Weichmacherkufe, er war daher glycerinfrei. Nach dem Trocknen wurde er befeuchtet, bis der Wassergehalt bei 14 bis 16 % lag, und anschließend aufgewickelt. Der Quellwert betrug 142 %, der Platzdruck 42 kPa und die statische Dehnung bei 15 kPa 44 mm. Die gerafften Schlauchabschnitte ließen sich auf einer automatischen Füllmaschine problemlos füllen.

### Beispiel 8:

Die gemäß Beispiel 1 hergestellt Spinnlösung wurde mit 0,8 %, bezogen auf das Gewicht der Cellulose, Polyvinylpyrrolidon K 70 (durchschnittliches M_{w}: 200.000) versetzt und solange bei einer Temperatur von 95 °C gerührt, bis eine homogene Mischung entstanden war. Die Lösung wurde dann durch eine Ringdüse mit einem Durchmesser von 80 cm und einer Spaltbreite von 0,7 mm extrudiert. Mit einer Geschwindigkeit von 30 m/min passierte der Schlauch eine 40 cm lange Luftstrecke, innerhalb derer er mit Druckluft querverstreckt wurde. Die weiteren Herstellungsschritte waren identisch mit den im Beispiel 1 beschriebenen, das Spinnbad enthielt jedoch eine 10 %ige NMMO-Lösung. Die Glycerinkufe enthielt eine 7 % an Glycerin.

Er wurde im aufgeblasenen Zustand in einer Weise getrocknet, daß sich die Flachbreite von 130 cm nicht änderte. Nach dem Befeuchten auf 14 bis 16 % Wassergehalt wurde der Schlauch aufgewickelt. Er wurde dann an einer Kante aufgeschnitten. Die auf diese Weise erhaltene Flachfolie hatte ein Gewicht von 40 g/m², eine Dicke von 35 um, einen Glyceringehalt von 21 %, einen Quellwert von 165 %, eine Reißfestigkeit von 20 N/mm² in Längsrichtung und 16 N/mm² in Querrichtung, eine Reißdehnung in Längsrichtung von 42 % und in Querrichtung von 54 %.

## Patentansprüche

1. Nahtlose, schlauchförmige Folie auf Cellulosebasis, erhältlich durch Extrudieren einer cellulose-, N-methyl-morpholin-N-oxid und wasserhaltigen Spinnlösung durch eine Ringspaltdüse und Behandeln des Folienschlauches in einem N-methyl-morpholin-N-oxid-haltigen, wäßrigen Spinnbad, wobei die Folie in einer Luftstrecke zwischen Ringspalt und Oberfläche des Spinnbads durch Blasverformung querverstreckt wird, dadurch gekennzeichnet, daß die Spinnlösung 0,2 bis 50 Gew.-%, bezogen auf das Gewicht der Cellulose, an modifizierenden Verbindungen enthält, die die Geschmeidigkeit, Zähigkeit, Clip- und Scherstabilität der schlauchförmigen Hülle erhöhen, wobei diese modifizierenden Verbindungen Stärke, Stärke- und Cellulosederivate, Zuckerester, Fettsäuren oder Fettsäuresalze, Wachse, Paraffine, hydrophile, in der Natur vorkommende Polymere, hydrophile, synthetische Polymere oder Polymere, die gleichzeitig hydrophile und hydrophobe Eigenschaften besitzen, sind, mit der Maßgabe, daß die modifizierenden Verbindungen keine Polyethylenimine sind.

2. Folie gemäß Anspruch 1, dadurch gekennzeichnet, daß der Anteil an Cellulose in der Lösung 7 bis 15 Gew.-%, bezogen auf das Gesamtgewicht der Lösung, beträgt.

3. Folie gemäß Anspruch 1 oder 2, dadurch gekennzeichnet, daß die Cellulose einen durchschnittlichen Polymerisationsgrad von 300 bis 700 aufweist.

4. Folie gemäß einem oder mehreren der Ansprüche 1 bis 3, dadurch gekennzeichnet, daß die Spinnlösung 90,5 bis 92,5 Gew.-% NMMO und 9,5 bis 7,5 Gew.-% Wasser, bezogen auf das Gesamtgewicht der Lösemittel, enthält.

5. Folie gemäß einem oder mehreren der Ansprüche 1 bis 4, dadurch gekennzeichnet, daß die Spinnlösung 0,2 bis 20 Gew.-%, bezogen auf das Gewicht der Cellulose, an modifizierenden Verbindungen enthält.

6. Folie gemäß Anspruch 5, dadurch gekennzeichnet, daß die Spinnlösung 1 bis 15 Gew.-%, bezogen auf das Gewicht der Cellulose, an modifizierenden Verbindungen enthält.

7. Folie gemäß einem oder mehreren der Ansprüche 1 bis 6, dadurch gekennzeichnet, daß die modifizierenden Verbindungen Alginsäure oder ein Alginat, Chitosan, Carrageenan, Polyvinylalkohol, Polyvinylacetat, ein Polyacrylat, ein Ester aus einem Zucker und Fettsäuren, wobei die Ester einen HLB-Wert von 1 bis 15 aufweisen, Polyvinylpyrrolidon, ein Copolymer aus Vinylpyrrolidon und (2-Dimethylaminoethyl)-methacrylat, ein Copolymer aus Methylvinylether und Maleinsäureanhydrid oder ein Copolymer aus Methylvinylether und Maleinsäuremonoalkylester ist.

8. Folie gemäß einem oder mehreren der Ansprüche 1 bis 7, dadurch gekennzeichnet, daß die Spinnlösung bei einer Temperatur von 85 bis 105 °C durch eine Ringspaltdüse mit einer Spaltbreite von 0,1 bis 2,0 mm extrudiert wird.

9. Folie gemäß einem oder mehreren der Ansprüche 1 bis 8, dadurch gekennzeichnet, daß der Abstand zwischen Ringspalt und Oberfläche des Spinnbads 1 bis 50 cm beträgt.

10. Folie gemäß einem oder mehreren der Ansprüche 1 bis 9, dadurch gekennzeichnet, daß das Spinnbad eine wäßrige Lösung ist, die 5 bis 50 Gew.-% NMMO enthält und eine Temperatur von 0 bis 50 °C aufweist.

11. Folie gemäß einem oder mehreren der Ansprüche 1 bis 10, dadurch gekennzeichnet, daß sie nach dem Spinnbad noch jeweils mehrere Fäll- und Waschbäder durchläuft.

12. Folie gemäß einem oder mehreren der Ansprüche 1 bis 11, dadurch gekennzeichnet, daß sie mit einem Weichmacher behandelt ist.

13. Verwendung der Folie gemäß einem oder mehreren der Ansprüche 1 bis 12 als Wursthülle.

14. Verwendung der Folie gemäß den Ansprüchen 1 bis 13 als Flachfolie nach dem Aufschneiden des Schlauches in Längsrichtung.

## Claims

1. A seamless tubular cellulose-based film, which is obtainable by extruding a cellulose-, N-methylmorpholine N-oxide- and water-containing spinning solution through an annular die and treating the tubular film in an N-methylmorpholine N-oxide-containing aqueous spinning bath, in which the film is transversely stretched by blowing in an air section between annular gap and surface of the spinning bath, wherein the spinning solution comprises 0.2 to 50% by weight, based on the weight of the cellulose, of modifying compounds which increase the suppleness, strength, clipping stability and shear stability of the tubular casing, these modifying compounds being starch, starch derivatives and cellulose derivatives, sugar esters, fatty acids or fatty acid salts, waxes, paraffins, hydrophilic naturally occuring polymers, hydrophilic synthetic polymers or polymers which simultaneously process hydrophilic and hydrophobic properties, with the proviso that the modifying compounds are not polyethyleneimines.

2. The film as claimed in claim 1, wherein the cellulose content in the solution is 7 to 15% by weight, based on the total weight of the solution.

3. The film as claimed in claim 1 or 2, wherein the cellulose has a mean degree of polymerization of 300 to 700.

4. The film as claimed in one or more of claims 1 to 3, wherein the spinning solution comprises 90.5 to 92.5% by weight of NMMO and 9.5 to 7.5% by weight of water, based on the total weight of the solvent.

5. The film as claimed in one or more of claims 1 to 4, wherein the spinning solution comprises 0.2 to 20% by weight of modifying compounds, based on the weight of the cellulose.

6. The film as claimed in claim 5, wherein the spinning solution comprises 1 to 15% by weight of modifying compounds, based on the weight of the cellulose.

7. The film as claimed in one or more of claims 1 to 6, wherein the modifying compounds are a sugar ester, alginic acid or an alginate, chitosan, carrageenan, polyvinyl alcohol, polyvinyl acetate, a polyacrylate, an ester of a sugar and fatty acids, the esters having an HLB value of 1 to 15, an ethoxylated or nonethoxylated fatty acid or salt thereof, wax, paraffin, polyvinylpyrrolidone, a copolymer of vinylpyrrolidone and 2-(dimethylamino)ethyl methacrylate, a copolymer of methyl vinyl ether and maleic anhydride or a copolymer of methyl vinyl ether and maleic acid monoalkyl ester.

8. The film as claimed in one or more of claims 1 to 7, wherein the spinning solution is extruded at a temperature of 85 to 105°C through an annular die having a gap width of 0.1 to 2.0 mm.

9. The film as claimed in one or more of claims 1 to 8, wherein the distance between annular gap and surface of the spinning bath is 1 to 50 cm.

10. The film as claimed in one or more of claims 1 to 9, wherein the spinning bath is an aqueous solution which comprises 5 to 50% by weight, of NMMO and has a temperature of 0 to 50°C.

11. The film as claimed in one or more of claims 1 to 10, wherein, downstream of the spinning bath, it further passes through in each case a plurality of precipitation and washing baths.

12. The film as claimed in one or more of claims 1 to 11, wherein it is treated with a plasticizer.

13. The use of the film as claimed in one or more of claims 1 to 12 as sausage casing.

14. The use of the film as claimed in claims 1 to 13 as flat film after cutting open the tube in the longitudinal direction.

## Revendications

1. Pellicule en forme de boyau, sans soudure, à base de cellulose, pouvant être obtenue par extrusion d'une solution de filage contenant de la cellulose, du N-oxyde de N-méthylmorpholine et de l'eau, à travers une filière annulaire, et traitement du boyau de pellicule dans un bain aqueux de filage contenant du N-oxyde de N-méthylmorpholine, la pellicule étant étirée transversalement par moulage par soufflage dans un trajet à l'air entre fente annulaire et surface du bain de filage, caractérisée en ce que la solution de filage contient 0,2 à 50 % en poids, par rapport au poids de la cellulose, de composés modificateurs qui augmentent la flexibilité, la ténacité, la tenue au pinçage et la résistance au cisaillement de l'enveloppe en forme de boyau, ces composés modificateurs étant l'amidon, des dérivés d'amidon et de cellulose, des esters à base de sucres, des acides gras ou des sels d'acides gras, des cires, des paraffines, des polymères hydrophiles existant dans la nature, des polymères hydrophiles synthétiques ou des polymères ayant simultanément des propriétés hydrophiles et des propriétés hydrophobes, étant entendu que les composés modificateurs ne sont pas des polyéthylène-imines.

2. Pellicule selon la revendication 1, caractérisée en ce que la teneur en cellulose de la solution va de 7 à 15 % en poids, par rapport au poids total de la solution.

3. Pellicule selon la revendication 1 ou 2, caractérisée en ce que la cellulose présente un degré moyen de polymérisation de 300 à 700.

4. Pellicule selon une ou plusieurs des revendications 1 à 3, caractérisée en ce que la solution de filage contient de 90,5 à 92,5 % en poids de NMMO et de 9,5 à 7,5 % en poids d'eau, par rapport au poids total des solvants.

5. Pellicule selon une ou plusieurs des revendications 1 à 4, caractérisée en ce que la solution de filage contient de 0,2 à 20 % en poids, par rapport au poids de la cellulose, de composés modificateurs.

6. Pellicule selon la revendication 5, caractérisée en ce que la solution de filage contient de 1 à 15 % en poids, par rapport au poids de la cellulose, de composés modificateurs.

7. Pellicule selon une ou plusieurs des revendications 1 à 6, caractérisée en ce que les composés modificateurs sont l'acide alginique ou un alginate, le chitosane, le carraghénane, le poly(alcool vinylique), le poly(acétate de vinyle), un polyacrylate, un ester à base d'un sucre et d'acides gras, les esters présentant un indice HLB de 1 à 15, la polyvinylpyrrolidone, un copolymère de vinylpyrrolidone et méthacrylate de 2-diméthylaminoéthyle, un copolymère d'éther méthylvinylique et anhydride maléique ou un copolymère d'éther méthylvinylique et d'un maléate de monoalkyle.

8. Pellicule selon une ou plusieurs des revendications 1 à 7, caractérisée en ce que la solution de filage est extrudée à une température de 85 à 105°C, à travers une filière annulaire ayant une largeur de fente de 0,1 à 2,0 mm.

9. Pellicule selon une ou plusieurs des revendications 1 à 8, caractérisée en ce que la distance entre fente annulaire et surface du bain de filage va de 1 à 50 cm.

10. Pellicule selon une ou plusieurs des revendications 1 à 9, caractérisée en ce que le bain de filage est une solution aqueuse qui contient de 5 à 50 % en poids de NMMO et présente une température de 0 à 50°C.

11. Pellicule selon une ou plusieurs des revendications 1 à 10, caractérisée en ce qu'elle traverse après le bain de filage encore, respectivement, plusieurs bains de précipitation et de lavage.

12. Pellicule selon une ou plusieurs des revendications 1 à 11, caractérisée en ce qu'elle est traitée par un plastifiant.

13. Utilisation de la pellicule selon une ou plusieurs des revendications 1 à 12, en tant qu'enveloppe pour saucisses.

14. Utilisation de la pellicule selon les revendications 1 à 13, en tant que pellicule plate, après le sectionnement du boyau dans le sens longitudinal.
